**Europäisches Patentamt**

**European Patent Office**

**Office européen des brevets**

(19)

(11) Veröffentlichungsnummer: **0 205 186**
**A2**

(12) # EUROPÄISCHE PATENTANMELDUNG

(21) Anmeldenummer: **86108129.7**

(22) Anmeldetag: **13.06.86**

(51) Int. Cl.⁴: **G 01 N 29/02**
**G 05 D 22/00**

(30) Priorität: **14.06.85 DE 3521472**

(43) Veröffentlichungstag der Anmeldung:
**17.12.86 Patentblatt 86/51**

(84) Benannte Vertragsstaaten:
**BE DE FR GB IT NL SE**

(71) Anmelder: **Siemens Aktiengesellschaft Berlin und München**
**Wittelsbacherplatz 2**
**D-8000 München 2(DE)**

(71) Anmelder: **FORD-WERKE AKTIENGESELLSCHAFT**
**Ottoplatz 2 Postfach 21 03 69**
**D-5000 Köln 21(DE)**

(72) Erfinder: **Schreiber, Hans**
**Hoenighausen 1c**
**D-8411 Lappersdorf(DE)**

(72) Erfinder: **Kraus, Andreas**
**Kaestner Strasse 70**
**D-5000 Köln(DE)**

(74) Vertreter: **Mehl, Ernst, Dipl.-Ing.**
**Postfach 22 01 76**
**D-8000 München 22(DE)**

(54) **Feuchtesensor.**

(57) Die Erfindung betrifft eine Schaltanordnung mit einem Feuchtesensor (1), der Zweige (12, 14) aufweist, die als Sender und Empfänger in einer Ebene ineinander verzahnt angeordnet und mit einer Auswerteschaltung (4) verbunden sind. Es ist vorgesehen, daß der Sender Schallwellen abstrahlt, die vom Empfänger detektiert werden. Die am Empfänger eintreffende Leistung hängt dann von der Dichte des Mediums im Raum zwischen Sender und Empfänger ab.

FIG 1

EP 0 205 186 A2

0205186

Ford-Werke Aktiengesellschaft   Unser Zeichen
Köln                            VPA 85 P 8 5 1 6 E

Siemens Aktiengesellschaft
Berlin und München                    1

## Feuchtesensor

Die Erfindung betrifft eine Schaltanordnung mit einem
Feuchtesensor, der Zweige aufweist, die als Sender und
Empfänger in einer Ebene ineinander verzahnt angeordnet
sind und mit einer Auswerteschaltung in Verbindung
stehen.

Eine derartige Schaltanordnung mit einem Feuchtesensor
ist bekannt (DE-AS 24 58 154). Dabei sind zwei Zweige
einer Fühlers aus elektrisch leitfähigem Material ineinander verzahnt angeordnet. Eine Auswerteschaltung detektiert den Stromfluß durch den Raum zwischen den beiden
Zweigen, der erheblich ansteigt wenn die Zweige durch
eine leitfähige Flüssigkeit überbrückt werden. Der
Feuchtesensor wird an einer Scheibe in einer dem Feuchteniederschlag  ausgesetzten Position angeordnet, so daß
z.B. Wasser den elektrischen Widerstand der Anordnung
stark verkleinern kann. Die Auswerteschaltung erkennt
dann den erhöhten Stromfluß und schaltet eine elektrische Scheibenheizung ein.

Ein derartiger Feuchtesensor ist in seiner zweckbedingten Position an der Außenfläche einer Scheibe
ständig Umwelteinflüssen ausgesetzt. Eine Verschmutzung
oder Korrosion der Zweige bzw. Elektroden kann dann eine
ständig leitende Verbindung der beiden Zweige zur Folge
haben. Sonach würde die Auswerteschaltung auch bei

Mnl 2 Ant/10.06.1985

trockenem Wetter ein Signal abgeben und beispielsweise die Scheibenheizung einschalten.

Der Erfindung liegt die Aufgabe zugrunde, einen Feuchtesensor zu entwickeln, der zuverlässig arbeitet, selbst dann, wenn sich salzartige Verkrustungen oder Korrosionspartikel, die die Zweige elektrisch leitend verbinden können, auf dem Sensor abgelagert haben.

Diese Aufgabe wird erfindungsgemäß dadurch gelöst, daß der Sender Schallwellen abstrahlt, die vom Empfänger detektiert werden, wobei die am Empfänger eintreffende Leistung von der Dichte des Mediums im Raum zwischen Sender und Empfänger abhängt.

Bei der erfindungsgemäßen Schaltanordnung wird der Effekt genutzt, daß sich die Schallübertragung durch Flüssigkeiten von der Schallübertragung durch Gase unterscheidet. Dadurch wird erreicht, daß der Feuchtesensor auf feste, selbst elektrisch leitfähige Verunreinigungen nicht anspricht. Der Empfänger kann immer nur dann ein erhöhtes Signal empfangen, wenn eine Flüssigkeit am Sensor vorhanden ist.

Nach einer Weiterbildung der Erfindung ist vorgesehen,
- daß die Zweige jeweils kammartig verbunden sind und aus einem piezokeramischen Material bestehen,
- daß ein erster Kamm aus Sendesonotroden mit einer Erregerschaltung zur Erzeugung von Dickenschwingungen verbunden ist, wodurch Ultraschallwellen abgestrahlt werden können,

- daß ein zweiter Kamm aus Empfangssonotroden, die
  mit den Sendesonotroden verzahnt sind, mit einer
  Empfängerschaltung zur Auswertung von Ultraschallschwingungen verbunden ist,
- die ihrerseits mit der Auswerteschaltung und einer
  elektrischen Anlage in Verbindung steht.

Dabei erzeugt die Erregerschaltung eine Wechselspannung
geeigneter Frequenz, die am ersten Kamm anliegt. Durch
diese Wechselspannung werden die fingerförmigen Sonotroden aus Piezokeramik zu Dickenschwingungen angeregt,
wodurch dann hochfrequente Schallwellen abgestrahlt
werden. Derartige Ultraschallwellen pflanzen sich in
Luft weit schlechter fort als in Wasser.

Der zweite Kamm aus piezokeramischem Material ist mit dem
ersten Kamm derart verzahnt angeordnet, daß eintreffende
Ultraschallwellen im zweiten Kamm eine Wechselspannung
erzeugen können. Die Empfängerschaltung detektiert diese
Wechselspannung, beispielsweise durch Amplitudendetektion
und gibt ein Signal an die Auswerteschaltung weiter.
Dort wird die empfangene Intensität mit einem vorgegebenen festen Wert verglichen. Ein so gewonnenes
Arbeitssignal kann elektrisch betriebene Anlagen, wie
eine Scheibenheizung einschalten, wenn also der vorgegebene Wert überschritten ist.

Mit dem Feuchtesensor nach der Erfindung wird der Vorteil erzielt, daß eine Signalübertragung vom ersten und
zweiten Kamm ausschließlich nur dann erfolgen kann,
wenn im Raum zwischen den Kämmen eine Flüssigkeit vorhanden ist. Diese Flüssigkeit braucht nicht elektrisch
leitfähig zu sein. Mit der Erfindung wird verhindert,
daß Verkrustungen des Sensors mit festen leitfähigen
Materialien eine Fehlauslösung bewirken können.
Darüber hinaus können die Ultraschallschwingungen am
Sensor anhaftende Schmutzpartikel ablösen. Schon ein
kleines Flüssigkeitsvolumen erzeugt eine Flüssigkeitsbrücke zwischen den Kämmen. Über diese Flüssigkeitsbrücke werden Ultraschallwellen weit besser als durch
Luft übertragen. Sonach arbeitet der Feuchtesensor auch
bei kleinen Flüssigkeitsmengen immer zuverlässig. Im
trockenen Zustand ist hingegen ein Auslösen nicht
möglich.

Nach einer Ausgestaltung der Erfindung weist die Auswerteschaltung einen Gleichrichter in Verbindung mit
einem Schmitt-Trigger auf. Wenn das Potential am Eingang des Schmitt-Triggers einen festen Wert überschreitet, steht am Ausgang des Schmitt-Triggers ein
Signal so lange an, bis das Potential am Eingang einen
festen Wert wieder unterschreitet. Bei geeigneter
Wahl des Schwellenwertes steuert die Auswerteschaltung
eine nachgeschaltete Anlage stets in Abhängigkeit vom
Feuchtegrad am Sensor.

Der erfindungsgemäße Feuchtemesser kann zum Ansteuern
einer Scheibenheizung beispielsweise an Fahrzeugfenstern oder anderer elektrischer Geräte eingesetzt
werden. Auch kann eine akustische oder optische Anzeigeeinrichtung als Warngerät mit dem Ausgang der Auswerteschaltung verbunden sein.

Darüber hinaus kann ein solcher Ultraschall-Feuchtesensor elektrisch leitende wie auch nicht leitende Flüssigkeiten detektieren, die z.B. aus einer defekten Leitung oder aus einem Behälter ausgelaufen sind. Es ist sonach ein breites Anwendungsgebiet gegeben. ‾

Die Erfindung soll anhand eines in der Zeichnung grob schematisch wiedergegebenen Ausführungsbeispiels näher erläutert werden:

Fig. 1    zeigt das Schaltbild einer erfindungsgemäßen Schaltanordnung.

Fig. 2    veranschaulicht den Aufbau eines Feuchtesensors nach der Erfindung.

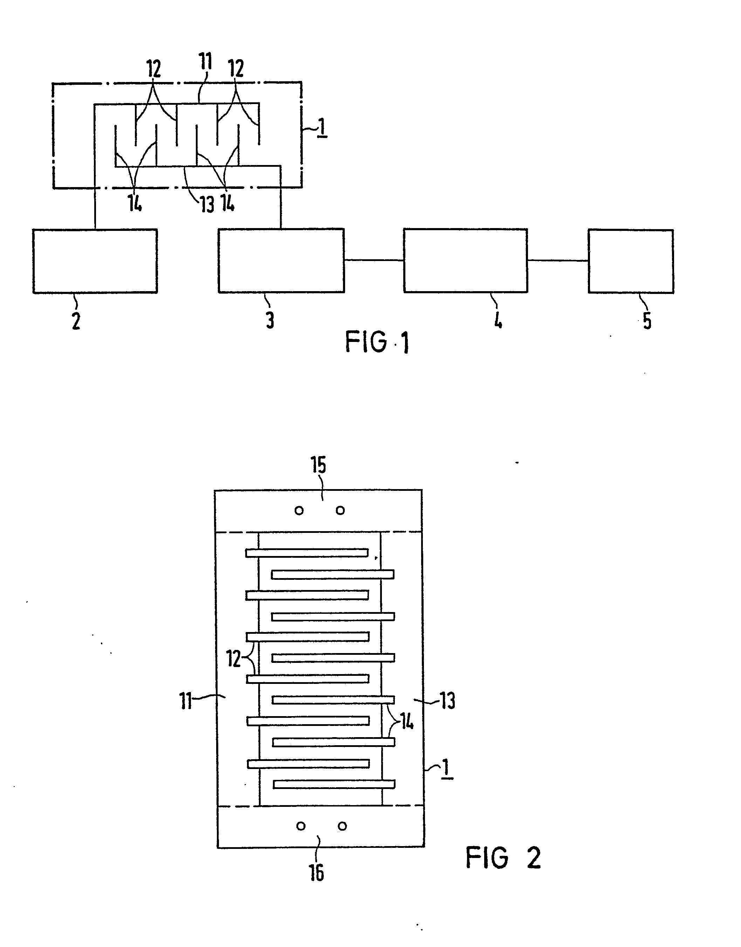

Eine Schaltanordnung nach Fig. 1 weist einen Feuchtesensor 1 auf. Mit einer Erregerschaltung 2, die eine Wechselspannung erzeugt, ist ein erster Kamm 11 des Feuchtesensors 1 verbunden. Dieser erste Kamm 11 besteht aus mehreren parallel angeordneten Sendesonotroden 12 aus einem piezokeramischen Material. Dort regt die zugeführte Wechselspannung Dickenschwingungen an, wodurch dann Ultraschallwellen abgestrahlt werden. Die Erregerspannung wird zweckmäßigerweise so gewählt, daß die Ultraschallfrequenz ungefähr 2 MHz beträgt.

Im Feuchtesensor 1 ist ein gleichartig aufgebauter zweiter Kamm 13 mit Empfangssonotroden 14 mit den Sendesonotroden 12 des ersten Kammes 11 verzahnt angeordnet. Die Abstände zwischen den Sonotroden 12 und 14 aus piezokeramischem Material soll dabei vorteilhafterweise ungefähr 1 mm betragen.

Der zweite Kamm 13 empfängt die vom ersten Kamm 11 abgestrahlten Ultraschallwellen und leitet daraufhin
einer nachgeschalteten Empfängerschaltung 3 Spannungsimpulse zu. Diese Empfängerschaltung 3 steht mit einer
Auswerteschaltung 4 in Verbindung, die einen Gleichrichter und einen Schmitt-Trigger aufweist. Die Ausgangssignale der Auswerteschaltung 4 werden dann einer
elektrischen Anlage 5 zugeleitet.

Die Energieübertragung mit Ultraschall ist im flüssigen
Medium erheblich höher als in Luft. Sonach bewirkt eine
auch nur geringe Flüssigkeitsmenge, die die Sonotroden
12 und 14 miteinander verbindet, ein Signal am Eingang
der Auswerteschaltung 4, das den Schwellwert des
Schmitt-Triggers übersteigt. Das dadurch ausgelöste
Signal am Ausgang der Auswerteschaltung 4 wird einer
elektrischen Anlage 5 zugeführt. Staub- und Schmutzpartikel können dabei die Funktionsfähigkeit des Feuchtesensors 1 nicht mindern.

Der Feuchtesensor 1 weist nach Fig. 2 zwei ineinander
verzahnt angeordnete Kämme 11 und 13 auf. Die stabförmigen Sonotroden 12 und 14 der Kämme 11 und 13 sind
aus einem piezokeramischen Material aufgebaut. Ihr Abstand beträgt ungefähr 1 mm.

Die beiden Kämme 11 und 13 sind mit Stegen 15 und 16
mechanisch fest miteinander verbunden. Dadurch wird die
Handhabung des Feuchtesensors 1 erleichtert. Die Stege
15 und 16, die auch zur Befestigung des Feuchtesensors 1
dienen, sind aus einem für Schallwellen nicht leitendem Material gefertigt. Sonach kann die Schallübertragung vom ersten Kamm 11 zum zweiten Kamm 13 nur über den Raum zwischen den Sonotroden 12 und den Sonotroden 14 erfolgen. Während eine elektrisch leitende Verbindung durch verschiedenartige Stoffe zustandekommen kann, so läßt eine ultraschalleitende Verbindung zwischen den Sonotroden 12 und 14 immer darauf schließen, daß eine Flüssigkeit vorhanden ist.

3 Patentansprüche
2 Figuren

## Liste der Bezugszeichen

1 Feuchtesensor
2 Erregerschaltung
3 Empfängerschaltung
4 Auswerteschaltung
5 elektrische Anlage
11 erster Kamm (Ultraschallsender)
12 Sendesonotroden
13 zweiter Kamm (Empfänger)
14 Empfangssonotroden
15 erster Steg
16 zweiter Steg

0205186

## Patentansprüche

1. Schaltanordnung mit einem Feuchtesensor (1), der Zweige (12, 14) aufweist, die als Sender und Empfänger in einer Ebene ineinander verzahnt angeordnet sind und mit einer Auswerteschaltung (4) in Verbindung stehen, d a d u r c h   g e k e n n z e i c h n e t , daß der Sender Schallwellen abstrahlt, die vom Empfänger detektiert werden, wobei die am Empfänger eintreffende Leistung von der Dichte des Mediums im Raum zwischen Sender und Empfänger abhängt.

2. Schaltanordnung nach Anspruch 1, d a d u r c h   g e k e n n z e i c h n e t ,
   - daß die Zweige (12, 14) jeweils kammartig verbunden sind und aus einem piezokeramischen Material bestehen,
   - daß ein erster Kamm (11) aus Sendesonotroden (12) mit einer Erregerschaltung (2) zur Erzeugung von Dickenschwingungen verbunden ist, wodurch Ultraschallwellen abgestrahlt werden können,
   - daß ein zweiter Kamm (13) aus Empfangssonotroden (14), die mit den Sendesonotroden (12) verzahnt sind, mit einer Empfängerschaltung (3) zur Auswertung von Ultraschallschwingungen verbunden ist,
   - die ihrerseits mit der Auswerteschaltung (4) und einer elektrischen Anlage (5) in Verbindung steht.

3. Schaltanordnung nach Anspruch 2, d a d u r c h   g e k e n n z e i c h n e t , daß die Auswerteschaltung (4) im wesentlichen aus einem Gleichrichter und einem Schmitt-Trigger besteht.

0205186

FIG 1

FIG 2